# EUROPEAN PATENT SPECIFICATION

(11) **EP 4 343 791 B1**
(45) Date of publication and mention of the grant of the patent: **01.01.2025**
(21) Application number: 22197342.3
(22) Date of filing: 23.09.2022
(51) Int. Cl.: G21C 3/18, G21C 7/103

(54) **A FUEL ASSEMBLY, A FOLLOWER COMPRISING A FUEL ASSEMBLY AND A NUCLEAR REACTOR**
BRENNSTABBÜNDEL, FOLGER MIT BRENNSTABBÜNDEL UND KERNREAKTOR
ASSEMBLAGE COMBUSTIBLE, SUIVEUR COMPRENANT UN ASSEMBLAGE COMBUSTIBLE ET UN RÉACTEUR NUCLÉAIRE

(43) Date of publication of application: 27.03.2024
(73) Proprietor: Westinghouse Electric Sweden AB, 721 63 Västerås (SE)
(72) Inventor: Bergmann, Uffe, 722 20 Västerås (SE); Furedal, Lars, 722 31 Västerås (SE); Rakopoulos, Vasileios, 752 17 Uppsala (SE); Näsström, Björn, 891 31 Örnsköldsvik (SE); Aleshin, Yuiry, Franklinton, NC 27525 (US)
(74) Representative: Bjerkén Hynell KB

(56) References cited:
- EP-A1- 0 369 305
- EP-A1- 0 621 605

## Description

### BACKGROUND OF THE INVENTION AND PRIOR ART

The present invention relates to a fuel assembly for a follower configured to initiate and control fission reactions in a nuclear reactor according to the preamble of claim 1. The invention also relates to a follower according to the preamble of claim 12 and to a nuclear reactor according to the preamble of claim 13.

In a WER-440 reactor core the reactivity and reactor power is controlled by axial movement of a, so-called, follower assembly comprising a fuel assembly lower part connected to an absorber assembly upper part. Usually a WER-440 reactor comprises a plurality of follower assemblies. In between and around the follower assemblies there are normal fuel assemblies of the core referred to as fixed assemblies. During normal full-power operation, the follower fuel assemblies are fully inserted into the core and the absorber assemblies are situated above the core. Boric acid dissolved in the coolant/moderator is normally used to compensate for excess of reactivity during fuel depletion along the cycle. However, some WER-440 plants are required to operate in load and/or frequency follow mode to stabilize the electricity grid. This requires changing the reactor power on an hourly, daily or weekly basis. The power maneuvers are accomplished by moving the follower assemblies in and out of the core. In the region of the follower assembly where the fuel assembly and absorber assemblies are connected, there is an excess of water which, in combination with an upper gas plenum region of the follower fuel rods without uranium, enhances moderation of neutrons thereby increasing the power locally in the nearby fuel rods of the surrounding fixed fuel assemblies. This power peak, when moving the follower axially, may cause pellet-cladding interaction (PCI) and eventually fuel failures.

Thus, it is desired to solve the problem with power peaking and to provide a solution that enables reducing of the power peaking in an efficient manner. RU2217819C2 describes a fuel rod concept comprising a short insert of hafnium or of an alloy of hafnium used in all the fuel rods of a fuel assembly for a follower, instead of a longer insert of steel, in order to provide more space in the fuel rod for nuclear fuel.

Further relevant prior art documents are EP0369305A1 and EP0621605A1. Each of which discloses fuel rods which comprise an insert of a neutron absorbing material.

### SUMMARY OF THE INVENTION

It is an object of the present invention to overcome, or at least alleviate, the above-mentioned problem of power peaking.

According to a first aspect of the invention, the object is achieved by a fuel assembly according to claim 1. According to a second aspect of the invention the object is achieved by a follower according to claim 12. According to a third aspect of the invention the object is achieved by a nuclear reactor according to claim 13.

Thus, the object is achieved by a fuel assembly for a follower configured to initiate and control fission reactions in a nuclear reactor.

The follower may also be called follower assembly or an emergency regulating and compensating assembly (ERC-assembly). A follower comprises an absorber assembly and a fuel assembly connected to the absorber assembly.

The fuel assembly comprises:
- a shroud and
- a plurality of first fuel rods and second fuel rods positioned in evenly distributed fuel rod positions within the shroud. Each of the plurality of the first fuel rods and the second fuel rods has a casing with an inner diameter and a nuclear fuel positioned inside the casing.

The casing of the first fuel rods may be different from the casing of the second fuel rods regarding the dimensions, such as diameter. Preferably, the first fuel rods and the second fuel rods comprise the same casing which may be a standard casing for fuel rods.

The second fuel rods are positioned in the outermost row of the fuel rod positions closest to the shroud and along the circumference of the shroud.

Further, each of the second fuel rods comprises an insert of a neutron absorbing material, wherein the second fuel rods are the only fuel rods of the plurality of the first fuel rods and the second fuel rods comprising the inserts of the neutron absorbing material.

The outermost row of the fuel rod positions closest to the shroud and along the circumference of the shroud is created by the fuel rod positions neighboring the shroud and following the shroud along the circumference of the shroud. The second fuel rods are positioned outermost in a radial direction from a center axis of the fuel assembly.

A cross section of the shroud along a plane perpendicular to the center axis of the fuel assembly may have different shapes. However, the preferred shape is a hexagonal shape.

The second fuel rods are the only fuel rods of the plurality of the first fuel rods and the second fuel rods comprising the inserts of the neutron absorbing material. Thus, the first fuel rods do not comprise any inserts of the neutron absorbing material.

The neutron absorbing material of the insert has a limited range of effect, reaching only a limited distance around the neutron absorbing material regarding the absorption of neutrons. Because the second fuel rods are positioned only in the outermost row of the fuel rod positions closest to the shroud, the power peaking in the surrounding fixed fuel assemblies around the follower can be reduced in a more efficient way. Further, by the second fuel rods positioned in the outermost row of the fuel rods a power peaking reduction can be achieved in a relatively simple and cheap way without any additional constructional modifications of the follower and without need of an excessive use of the neutron absorbing material that may be costly. This, because existing fuel rods can be used and a limited number can be modified by providing the rods with the insert of a neutron absorbing material, which rods, herein called second fuel rods are then positioned in the outermost row.

Further advantages are that inserts are preferably cylindrical and can be manufactured relatively easily. Further, placing of the inserts in the casing is a relatively simple procedure.

Consequently, an improved fuel assembly is provided having conditions for efficient reduction of the power peaking. Thereby, the above-mentioned object is achieved.

Optionally, the second fuel rods are evenly distributed in the outermost row of the fuel rod positions along the circumference of the shroud. That means that there are equal distances between the second fuel rods positioned in the outermost row of the fuel rod positions along the circumference of the shroud. As a result, power peaking can be reduced in an efficient way in the fuel rods of the fixed fuel assemblies surrounding the follower.

Optionally, the second fuel rods constitute at least 40 % of the total number of fuel rods in the outermost row of the fuel rod positions. Thus, there are enough second fuel rods in the outermost row to provide conditions for an efficient power peaking reduction.

Optionally, the neutron absorbing material is Hafnium (Hf). Hafnium is an adequately efficient neutron absorbing material to provide the intended effect, and not too efficient which could reduce the effect of a neutron absorbing material with time in the reactor. Hf material is chemically compatible with for example zircalloy casing, sometimes referred to as cladding, and plenum spring materials. Thermal expansion and irradiation growth of Hf inserts, that may also be called absorber pins, are known to be low, which is important considering sufficient free expansion gap to the casing. Hf inserts have good mechanical properties, and their ends can be machined to be mechanically compatible with a top-end plug and/or plenum spring.

Other materials, such as for example borated steel can be used.

Optionally, Hf constitutes at least 50 % of the total material mass composition of the insert, preferably at least 90 % of the total material mass composition of the insert. Thus, conditions are provided for an efficient neutron absorption and power peaking control.

Optionally, each of the second fuel rods comprises a plenum spring, wherein the insert is positioned above the plenum spring in a normal operation position of the fuel assembly. Thus, conditions are provided for an efficient damping of power peaking because the insert is positioned near the top end of the second fuel rod. Further, an axial growth of the insert can be absorbed by the compressible plenum spring.

Optionally, each of the second fuel rods comprises a top-end plug mounted at a top-end of the second fuel rod. Thus, the fuel rod can be enclosed by the top-end plug.

Optionally, the insert is positioned at least partly above the top-end plug in the normal operation position of the fuel assembly. Thus, conditions are provided for improved damping of the power peaking because the insert can be positioned at the very top of the second fuel rod, above the top-end plug. According to one embodiment, the insert can be screwed into the top-end plug.

Optionally, the insert has a length that is at last five times the inner diameter of the casing of the second fuel rod. Thus, conditions are provided for an efficient damping of the power peaking can be achieved.

Optionally, a diameter of the insert is at least 50 % of the inner diameter of the casing of the second fuel rod, preferably at least 75 % of the inner diameter of the casing of the second fuel rod. Thus, the insert can be positioned within the casing and the radial growth of the insert can be handled by a space between the outer surface if the insert and the inner surface of the casing.

Optionally, the nuclear reactor is a Water-Water Energetic Reactor- 440 (WER-440) and the fuel assembly is a part of a follower configured to initiate and control fission reactions in the WER-440.

The object is also achieved by a follower configured to initiate and control fission reactions in a nuclear reactor, wherein the follower comprises an absorber assembly and a fuel assembly according to any of the embodiments described herein. Because the follower comprises an improved fuel assembly, an improved follower is provided. Thus, the above-mentioned object is achieved.

Further, the object is achieved by a nuclear reactor comprising a follower according to any of the embodiments described herein. Because the nuclear reactor comprises an improved follower, an improved nuclear reactor is provided. Thus, the above-mentioned object is achieved.

Optionally, the nuclear reactor is a Water-Water Energetic Reactor-440 (WER-440).

### BRIEF DESCRIPTION OF THE DRAWINGS

In the following, preferred embodiments of the invention are described with reference to the attached drawings, on which:
- Fig. 1: is a schematic illustration of a part of a follower,
- Fig. 2: illustrates schematically a cross sectional view of a fuel assembly for a follower according to an embodiment,
- Fig. 2a: illustrates schematically a cross sectional view of a fuel assembly for a follower according to a further embodiment and
- Fig. 3: is a schematic illustration of a nuclear reactor comprising a follower according to an embodiment.

### DETAILED DESCRIPTION OF PREFERRED EMBODIMENTS OF THE INVENTION

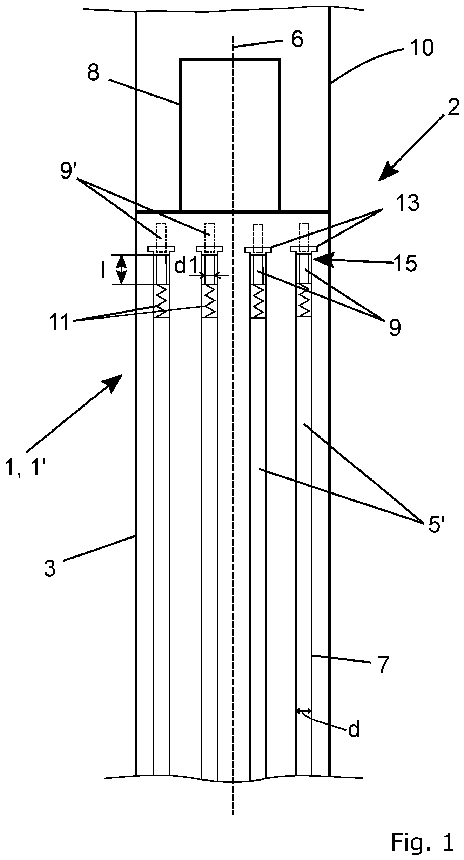

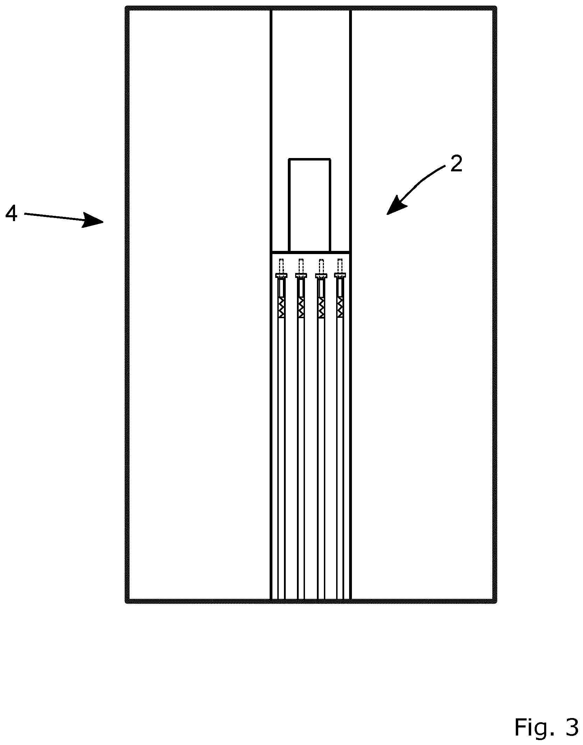

Fig. 1 shows, in a schematic way, a part of a follower 2 configured to initiate and control fission reactions in a nuclear reactor 4. A schematical illustration of the nuclear reactor 4 is shown in Fig. 3.

The follower 2 comprises a fuel assembly 1, 1'. The fuel assembly 1, 1' comprises a shroud 3 and plurality of first fuel rods 5 and second fuel rods 5' positioned in evenly distributed fuel rod positions within the shroud 3. In Fig. 1 only the second fuel rods 5' are illustrated in a schematical way.

The follower 2 comprises a connection portion 8 arranged for connection of the fuel assembly 2 to an absorber assembly 10.

Each of the second fuel rods 5' has a casing 7 with an inner diameter d and a nuclear fuel (not illustrated) positioned inside the casing 7.

The casing 7, sometimes called cladding, is a cylindrical tube made, for example, of stainless steel or zircalloy.

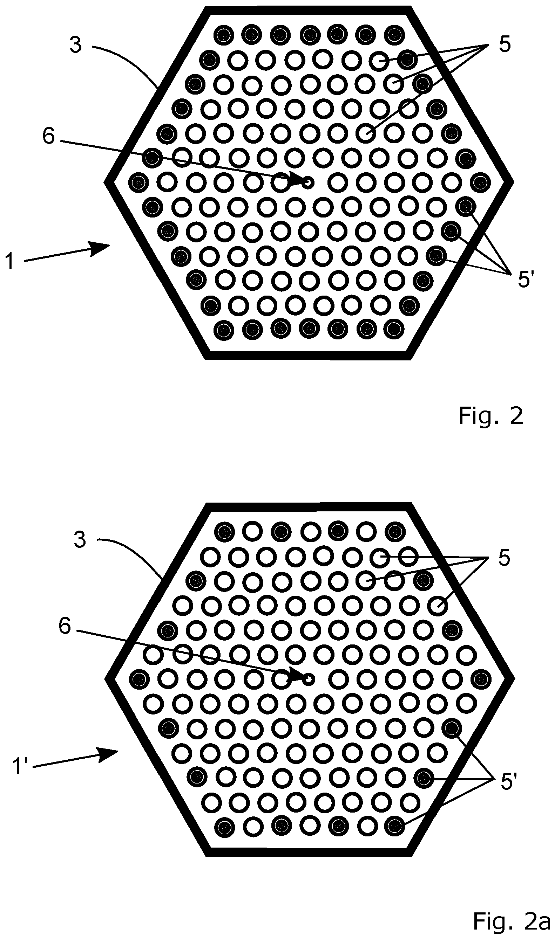

The second fuel rods 5' are positioned in the outermost row of the fuel rod positions closest to the shroud 3 and along the circumference of the shroud 3. The outermost row is illustrated in Fig. 2 and Fig. 2a.

Each of the second fuel rods 5' comprises an insert 9, 9' of a neutron absorbing material, wherein the second fuel rods 5' are the only fuel rods of the plurality of the first fuel rods 5 and the second fuel rods 5' comprising said inserts 9, 9' of the neutron absorbing material.

Preferably the insert 9, 9' is arranged as a solid pin.

Preferably, the neutron absorbing material is Hafnium (Hf). Hafnium is an adequately efficient neutron absorbing material to provide the intended effect, and not too efficient which could reduce the effect of a neutron absorbing material with time in the reactor. Hf material is chemically compatible with for example zircalloy casing, sometimes referred to as cladding, and plenum spring materials. Thermal expansion and irradiation growth of Hf inserts, that may also be called absorber pins, are known to be low, which is important considering sufficient free expansion gap to the casing. Hf inserts have good mechanical properties, and their ends can be machined to be mechanically compatible with a top-end plug and/or plenum spring. Other materials, such as for example borated steel, can be used as a neutron absorbing material.

Hf constitutes at least 50 % of the total material mass composition of the insert, preferably at least 90 % of the total material mass composition of the insert. Thus, conditions are provided for an efficient neutron absorption and power peak control.

According to the embodiments illustrated in Fig. 1, Each of the second fuel rods 5' comprise a plenum spring 11, wherein the inserts 9, 9' are positioned above the plenum spring 11 in a normal operation position of the fuel assembly 1, 1'. The nuclear fuel is positioned below the plenum spring 11 in a normal operation position of the fuel assembly 1, 1'. The insert 9 in Fig. 1 is illustrated in a first position, that is a preferred position of the insert 9 positioned above the plenum spring 11 and having contact with the plenum spring 11.

The inserts 9' in Fig. 1 marked with dashed line illustrate an alternative position of the inserts 9' instead of the position of the insert 9.

According to the embodiments illustrated in Fig. 1, each of the second fuel rods 5' comprises a top-end plug 13 mounted at a top-end 15 of the second fuel rod 5'. The top-end plug 13 may be connected to the casing by welding.

Thus, the insert 9' may be positioned at least partly above the top-end plug 13 in the normal operation position of the fuel assembly 1, 1'. The insert 9' may comprise outer or inner threads and can be screwed to the top-end plug 13 that may comprise a threaded opening or pin to enable the insert 9' to be screwed to the top-end plug 13. The insert 9', after being screwed, can be secured to the top-end plug 13 by welding.

Preferably, the insert 9, 9' has a length I that is at last five times the inner diameter d of the casing 7. Thus, conditions are provided for an efficient power peak reduction.

A diameter d1 of the insert 9, 9' is at least 50 % of the inner diameter d of the casing 7 of the second fuel rod 5', preferably at least 75 % of the inner diameter d of the casing 7 of the second fuel rod 5'. Thus, preferably the diameter d1 of the insert 9, 9' is less than the inner diameter d of the casing 7. However, according to some embodiments for the position of the insert 9' at least partly above the top-end plug 13, the diameter d1 of the insert 9' may be equal or larger than the inner diameter d of the casing 7.

Fig. 2 illustrates schematically a cross sectional view of a fuel assembly 1 for a follower 2 according to an embodiment.

The fuel assembly 1 comprises:
- a shroud 3 and
- a plurality of first fuel rods 5 and second fuel rods 5' positioned in evenly distributed fuel rod positions within the shroud 3.

As illustrated in Fig. 2 the shape of a cross section of the shroud 3 along a plane perpendicular to a center axis 6 of the fuel assembly 1 is a hexagonal shape, which is the preferable shape.

The second fuel rods 5' are positioned in the outermost row of the fuel rod positions closest to the shroud 3 and along the circumference of the shroud 3. The outermost row of the fuel rod positions closest to the shroud 3 and along the circumference of the shroud 3 is created by the fuel rod positions neighboring the shroud 3 and following the shroud 3 along the circumference of the shroud 3. The outer outermost row of the fuel rod positions is created by fuel rod positions outermost in a radial direction from a center axis 6 of the fuel assembly 1. Thus, the second fuel rods 5' are positioned outermost in a radial direction from the center axis 6 of the fuel assembly 1.

The second fuel rods 5' are evenly distributed in the outermost row of the fuel rod positions along the circumference of the shroud 3. The second fuel rods 5' constitutes least 40 % of the total number of fuel rods in the outermost row of the fuel rod positions. According to the embodiment illustrated in Fig. 2, each of the fuel rod positions in the outermost row is occupied by the second fuel rod 5'. Thus, the second fuel rods 5' are positioned in all of the fuel rod positions of the outermost row.

Fig. 2a illustrates schematically a cross sectional view of a fuel assembly 1' for a follower 2 according to a further embodiment.

The fuel assembly 1' comprises:
- a shroud 3 and
- a plurality of first fuel rods 5 and second fuel rods 5' positioned in evenly distributed fuel rod positions within the shroud 3.

As illustrated in Fig. 2a the shape of a cross section of the shroud 3 along a plane perpendicular to a center axis 6 of the fuel assembly 1' is a hexagonal shape, which is the preferable shape.

The second fuel rods 5' are positioned in the outermost row of the fuel rod positions closest to the shroud 3 and along the circumference of the shroud 3. The outermost row of the fuel rod positions closest to the shroud 3 and along the circumference of the shroud 3 is created by the fuel rod positions neighboring the shroud 3 and following the shroud 3 along the circumference of the shroud 3. The outer outermost row of the fuel rod positions is created by fuel rod positions outermost in a radial direction from a center axis 6 of the fuel assembly 1'. Thus, the second fuel rods 5' are positioned outermost in a radial direction from the center axis 6 of the fuel assembly 1'.

The second fuel rods 5' are evenly distributed in the outermost row of the fuel rod positions along the circumference of the shroud 3. The second fuel rods 5' constitutes least 40 % of the total number of fuel rods in the outermost row of the fuel rod positions. According to the embodiment illustrated in Fig. 2a, every second of the fuel rod positions in the outermost row is occupied by the second fuel rod 5'. Thus, the second fuel rods 5' constitutes 50 % of the total number of fuel rods in the outermost row of the fuel rod positions. In other words, the second fuel rods 5' are positioned in half of the number of the fuel rod positions of the outermost row.

Fig. 3 is a schematic illustration of a nuclear reactor 4 comprising a follower 2. Preferably, the nuclear reactor 4 is a Water-Water Energetic Reactor-440 WER-440 and wherein the fuel assembly 1, 1' is a part of a follower 2 configured to initiate and control fission reactions in the WER-440. WER-440 is known in the art and therefore is not described herein in details. According to the schematic illustration of a reactor 4 in Fig. 1 only one follower 2 has been illustrated. However, the reactor 4 usually comprises a plurality of followers 2.

## Claims

1. A fuel assembly (1, 1') for a follower (2) configured to initiate and control fission reactions in a nuclear reactor (4), wherein the fuel assembly (1, 1') comprises:
- a shroud (3) and
- a plurality of first fuel rods (5) and second fuel rods (5') positioned in evenly distributed fuel rod positions within the shroud (3), wherein each of the plurality of the first fuel rods (5) and the second fuel rods (5') has a casing (7) with an inner diameter (d) and a nuclear fuel positioned inside the casing (7),
**characterized in that**
the second fuel rods (5') are positioned in the outermost row of the fuel rod positions closest to the shroud (3) and along the circumference of the shroud (3), wherein each of the second fuel rods (5') comprises an insert (9, 9') of a neutron absorbing material, wherein the second fuel rods (5') are the only fuel rods of the plurality of the first fuel rods (5) and the second fuel rods (5') comprising said inserts (9, 9') of the neutron absorbing material.

2. The fuel assembly (1, 1') according to claim 1, wherein the second fuel rods (5') are evenly distributed in the outermost row of the fuel rod positions along the circumference of the shroud (3).

3. The fuel assembly (1, 1') according to claim 1 or 2, wherein the second fuel rods (5') constitute at least 40 % of the total number of fuel rods in said outermost row of the fuel rod positions.

4. The fuel assembly (1, 1') according to any claims 1 to 3, wherein said neutron absorbing material is Hafnium (Hf).

5. The fuel assembly (1, 1') according to claim 4, wherein Hf constitutes at least 50 % of the total material mass composition of the insert (9, 9'), preferably at least 90 % of the total material mass composition of the insert (9, 9').

6. The fuel assembly (1, 1') according to any of claims 1 to 5, wherein each of the second fuel rods (5') comprises a plenum spring (11), wherein the insert (9, 9') is positioned above the plenum spring (11) in a normal operation position of the fuel assembly (1, 1').

7. The fuel assembly (1, 1') according to any of claims 1 to 6, wherein each of the second fuel rods (5') comprises a top-end plug (13) mounted at a top-end (15) of the second fuel rod (5').

8. The fuel assembly (1, 1') according to claim 7, wherein the insert (9') is positioned at least partly above the top-end plug (13) in the normal operation position of the fuel assembly (1, 1').

9. The fuel assembly (1) according to any of claims 1 to 8, wherein the insert (9, 9') has a length (l) that is at last five times the inner diameter (d) of the casing (7).

10. The fuel assembly (1) according to any of claims 1 to 9, wherein a diameter (d1) of the insert (9, 9') is at least 50 % of the inner diameter (d) of the casing (7) of the second fuel rod (5'), preferably at least 75 % of the inner diameter (d) of the casing (7) of the second fuel rod (5').

11. The fuel assembly (1) according to any of claims 1 to 10, wherein the nuclear reactor (4) is a Water-Water Energetic Reactor-440 (WER-440) and wherein the fuel assembly (1, 1') is a part of a follower (2) configured to initiate and control fission reactions in the WER-440.

12. A follower (2) configured to initiate and control fission reactions in a nuclear reactor (4), wherein the follower (2) comprises an absorber assembly (10) and a fuel assembly (1, 1') according to any of claims 1 to 11.

13. A nuclear reactor (4) comprising a follower (2) according to claim 12.

14. The nuclear reactor (4) according to claim 13, wherein the nuclear reactor (4) is a Water-Water Energetic Reactor-440 (VVER-440).

## Patentansprüche

1. Brennstabbündel (1, 1') für ein Folgeelement (2), das dazu ausgestaltet ist, Spaltungsreaktionen in einem Nuklearreaktor (4) zu initiieren und zu steuern, wobei das Brennstabbündel (1, 1') Folgendes umfasst:
- einen Mantel (3) und
- eine Mehrzahl von ersten Brennstäben (5) und zweiten Brennstäben (5'), die in gleichmäßig verteilten Brennstabpositionen innerhalb des Mantels (3) angeordnet sind, wobei jeder der Mehrzahl von den ersten Brennstäben (5) und den zweiten Brennstäben (5') ein Gehäuse (7) mit einem Innendurchmesser (d) und einem innerhalb des Gehäuses (7) angeordneten Nuklearbrennstoff aufweist,
**dadurch gekennzeichnet, dass**
die zweiten Brennstäbe (5') in der äußersten Reihe der Brennstabpositionen, dem Mantel (3) am nächsten und entlang des Umfangs des Mantels (3), angeordnet sind, wobei jeder der zweiten Brennstäbe (5') einen Einsatz (9, 9') aus einem neutronenabsorbierenden Material umfasst, wobei die zweiten Brennstäbe (5') die einzigen Brennstäbe der Mehrzahl von den ersten Brennstäben (5) und den zweiten Brennstäben (5') sind, die die Einsätze (9, 9') aus dem neutronenabsorbierenden Material umfassen.

2. Brennstabbündel (1, 1') nach Anspruch 1, wobei die zweiten Brennstäbe (5') in der äußersten Reihe der Brennstabpositionen entlang des Umfangs des Mantels (3) gleichmäßig verteilt sind.

3. Brennstabbündel (1, 1') nach Anspruch 1 oder 2, wobei die zweiten Brennstäbe (5') mindestens 40 % der Gesamtanzahl von Brennstäben in der äußersten Reihe der Brennstabpositionen ausmachen.

4. Brennstabbündel (1, 1') nach einem der Ansprüche 1 bis 3, wobei das neutronenabsorbierende Material Hafnium (Hf) ist.

5. Brennstabbündel (1, 1') nach Anspruch 4, wobei Hf mindestens 50 % der gesamten Materialmassezusammensetzung des Einsatzes (9, 9'), vorzugsweise mindestens 90 % der gesamten Materialmassezusammensetzung des Einsatzes (9, 9'), ausmacht.

6. Brennstabbündel (1, 1') nach einem der Ansprüche 1 bis 5, wobei jeder der zweiten Brennstäbe (5') eine Sammelraumfeder (11) umfasst, wobei der Einsatz (9, 9') in einer normalen Betriebsposition des Brennstabbündels (1, 1') über der Sammelraumfeder (11) angeordnet ist.

7. Brennstabbündel (1, 1') nach einem der Ansprüche 1 bis 6, wobei jeder der zweiten Brennstäbe (5') einen oberen Stopfen (13) umfasst, der an einem oberen Ende (15) des zweiten Brennstabs (5') angebracht ist.

8. Brennstabbündel (1, 1') nach Anspruch 7, wobei der Einsatz (9') in der normalen Betriebsposition des Brennstabbündels (1, 1') mindestens teilweise über dem oberen Stopfen (13) angeordnet ist.

9. Brennstabbündel (1) nach einem der Ansprüche 1 bis 8, wobei der Einsatz (9, 9') eine Länge (I) aufweist, die mindestens dem Fünffachen des Innendurchmessers (d) des Gehäuses (7) entspricht.

10. Brennstabbündel (1) nach einem der Ansprüche 1 bis 9, wobei ein Durchmesser (d1) des Einsatzes (9, 9') mindestens 50 % des Innendurchmessers (d) des Gehäuses (7) des zweiten Brennstabs (5'), vorzugsweise mindestens 75 % des Innendurchmessers (d) des Gehäuses (7) des zweiten Brennstabs (5'), entspricht.

11. Brennstabbündel (1) nach einem der Ansprüche 1 bis 10, wobei der Nuklearreaktor (4) ein Wasser-Wasser-Energie-Reaktor-440 (VVER-440) ist und wobei das Brennstabbündel (1, 1') ein Teil eines Folgeelements (2) ist, das dazu ausgestaltet ist, Spaltungsreaktionen in dem VVER-440 zu initiieren und zu steuern.

12. Folgeelement (2), das dazu ausgestaltet ist, Spaltungsreaktionen in einem Nuklearreaktor (4) zu initiieren und zu steuern, wobei das Folgeelement (2) eine Absorberanordnung (10) und ein Brennstabbündel (1, 1') nach einem der Ansprüche 1 bis 11 umfasst.

13. Nuklearreaktor (4), umfassend ein Folgeelement (2) nach Anspruch 12.

14. Nuklearreaktor (4) nach Anspruch 13, wobei der Nuklearreaktor (4) ein Wasser-Wasser-Energie-Reaktor-440 (VVER-440) ist.

## Revendications

1. Ensemble combustible (1, 1') pour un prolongateur (2) configuré pour lancer et commander des réactions de fission dans un réacteur nucléaire (4), dans lequel l'ensemble combustible (1, 1') comprend :
- une enveloppe (3) et
- une pluralité de premières barres de combustible (5) et de deuxièmes barres de combustible (5') positionnées dans des positions de barres de combustible régulièrement réparties au sein de l'enveloppe (3), dans lequel chacune de la pluralité des premières barres de combustible (5) et des deuxièmes barres de combustible (5') a un boîtier (7) avec un diamètre intérieur (d) et un combustible nucléaire positionné à l'intérieur du boîtier (7),
- **caractérisé en ce que**
les deuxièmes barres combustibles (5') sont positionnées dans la rangée la plus externe des positions de barres combustibles les plus proches de l'enveloppe (3) et le long de la circonférence de l'enveloppe (3), dans lequel chacune des deuxièmes barres combustibles (5') comprend un insert (9, 9') d'un matériau absorbeur de neutrons, dans lequel les deuxièmes barres combustibles (5') sont les seules barres combustibles de la pluralité de premières barres combustibles (5) et de deuxièmes barres combustibles (5') comprenant lesdits inserts (9, 9') du matériau absorbeur de neutrons.

2. Ensemble combustible (1, 1') selon la revendication 1, dans lequel les deuxièmes barres de combustible (5') sont réparties de manière régulière dans la rangée la plus externe des positions des barres de combustible le long de la circonférence de l'enveloppe (3) .

3. Ensemble combustible (1, 1') selon la revendication 1 ou 2, dans lequel les deuxièmes barres combustibles (5') constituent au moins 40 % du nombre total de barres combustibles dans ladite rangée la plus externe des positions de barres combustibles.

4. Ensemble combustible (1, 1') selon l'une quelconque des revendications 1 à 3, dans lequel ledit matériau absorbeur de neutrons est l'hafnium (Hf).

5. Ensemble combustible (1, 1') selon la revendication 4, dans lequel Hf constitue au moins 50 % de la composition massique totale de matériau de l'insert (9, 9'), de préférence au moins 90 % de la composition massique totale de matériau de l'insert (9, 9').

6. Ensemble combustible (1, 1') selon l'une quelconque des revendications 1 à 5, dans lequel chacune des deuxièmes barres combustibles (5') comprend un ressort de chambre d'expansion (11), dans lequel l'insert (9, 9') est positionné au-dessus du ressort de chambre d'expansion (11) dans une position de fonctionnement normal de l'ensemble combustible (1, 1').

7. Ensemble combustible (1, 1') selon l'une quelconque des revendications 1 à 6, dans lequel chacune des deuxièmes barres combustibles (5') comprend un bouchon d'extrémité supérieure (13) monté au niveau d'une extrémité supérieure (15) de la deuxième barre combustible (5').

8. Ensemble combustible (1, 1') selon la revendication 7, dans lequel l'insert (9') est positionné au moins partiellement au-dessus du bouchon d'extrémité supérieure (13) dans la position de fonctionnement normal de l'ensemble combustible (1, 1').

9. Ensemble combustible (1) selon l'une quelconque des revendications 1 à 8, dans lequel l'insert (9, 9') a une longueur (1) qui est au moins cinq fois le diamètre intérieur (d) de l'enveloppe (7).

10. Ensemble combustible (1) selon l'une quelconque des revendications 1 à 9, dans lequel un diamètre (d1) de l'insert (9, 9') représente au moins 50 % du diamètre intérieur (d) de l'enveloppe (7) de la deuxième barre combustible (5'), de préférence au moins 75 % du diamètre intérieur (d) de l'enveloppe (7) de la deuxième barre combustible (5').

11. Ensemble combustible (1) selon l'une quelconque des revendications 1 à 10, dans lequel le réacteur nucléaire (4) est un réacteur de puissance eau-eau-440 (VVER-440) et dans lequel l'ensemble combustible (1, 1') est une partie d'un prolongateur (2) configuré pour lancer et commander des réactions de fission dans le VVER-440.

12. Prolongateur (2) configuré pour lancer et commander des réactions de fission dans un réacteur nucléaire (4), dans lequel le prolongateur (2) comprend un ensemble absorbeur (10) et un ensemble combustible (1, 1') selon l'une quelconque des revendications 1 à 11.

13. Réacteur nucléaire (4) comprenant un prolongateur (2) selon la revendication 12.

14. Réacteur nucléaire (4) selon la revendication 13, dans lequel le réacteur nucléaire (4) est un réacteur de puissance eau-eau-440 (VVER-440) .
